# EUROPEAN PATENT SPECIFICATION

(11) **EP 3 955 694 B1**
(45) Date of publication and mention of the grant of the patent: **12.07.2023**
(21) Application number: 20847276.1
(22) Date of filing: 05.06.2020
(51) Int. Cl.: H04W 76/19, H04W 4/80, H04W 76/14, H04W 84/18

(54) **METHOD AND APPARATUS FOR BACK-CONNECTING BLUETOOTH DEVICE, TERMINAL AND COMPUTER-READABLE STORAGE MEDIUM**
VERFAHREN UND VORRICHTUNGEN ZUM RÜCKVERBINDEN VON BLUETOOTH-VORRICHTUNG, ENDGERÄT UND COMPUTERLESBARES SPEICHERMEDIUM
PROCÉDÉ ET APPAREILS DE CONNEXION DE RETOUR D'UN DISPOSITIF BLUETOOTH, TERMINAL ET SUPPORT DE STOCKAGE LISIBLE PAR ORDINATEUR

(30) Priority: 29.07.2019 CN 201910688818
(43) Date of publication of application: 16.02.2022
(73) Proprietor: Oneplus Technology (Shenzhen) Co., Ltd., Shenzhen, Guangdong 518000 (CN)
(72) Inventor: WEN, Xuejie, Shenzhen, Guangdong 518000 (CN)
(74) Representative: Manitz Finsterwald Patent- und Rechtsanwaltspartnerschaft mbB
(86) International application number: PCT/CN2020/094715
(87) International publication number: WO 2021/017644

(56) References cited:
- WO-A1-2013/177665
- WO-A1-2018/053970
- WO-A1-2019/112268
- CN-A- 103 715 577
- CN-A- 104 469 658
- CN-A- 104 581 646
- CN-A- 105 577 293
- CN-A- 108 541 080
- CN-A- 108 966 364
- CN-A- 110 602 672
- US-A1- 2016 286 341

## Description

### CROSS-REFERENCE TO RELATED APPLICATION

The application is based upon and claims priority to Chinese Patent Application No. 201910688818.X, filed on July 29, 2019 and entitled "Method and Device for Reconnection of Bluetooth Device, Terminal and Computer Readable Storage Medium".

### TECHNICAL FIELD

The application relates to the technical field of communication, and in particular, to a method and device for reconnection of a Bluetooth device, a terminal and a computer readable storage medium.

### BACKGROUND

Bluetooth is a wireless technical standard, which may realize short-distance data exchange among fixed equipment, mobile equipment and personal area networks of buildings (UHF radio waves in ISM band of 2.4-2.485GHz). A Bluetooth device applies Bluetooth technology to a hands-free device, so that a user may avoid the entanglement of annoying wires and talk easily in various ways. Since the advent of the Bluetooth device, it has been a good tool for mobile business families to improve their efficiency.

When the Bluetooth device is disconnected from a connected terminal and then reconnected, it is called Bluetooth reconnection. Different Bluetooth devices will have different reconnection modes when initiating reconnection. Some Bluetooth devices only actively reconnect a call audio protocol of the terminal, while a media audio protocol needs to be initiated by the terminal for connection. However, in this kind of Bluetooth device connection solutions, the Bluetooth device reconnection process takes a long time.

### SUMMARY

The present invention is defined in the claims.

In view of the above, there is a need to provide a method and device for reconnection of a Bluetooth device, a terminal and a computer readable storage medium to solve the above technical problems.

There is provided a method for reconnection of a Bluetooth device including the following operations.

Whether the Bluetooth device is a Bluetooth reconnection delay device is determined when a reconnection completion signal of the Bluetooth device is detected.

When it is determined that the Bluetooth device is the Bluetooth reconnection delay device, timing is started from the moment when the reconnection completion signal is detected.

A media audio protocol reconnection request is initiated after a preset time period from the moment when the reconnection completion signal is detected. The preset time period is less than a standard reconnection time interval.

There is provided a device for reconnection of a Bluetooth device including a signal detection module, a timing module and a request sending module.

The signal detection module is configured to determine whether the Bluetooth device is a Bluetooth reconnection delay device when a reconnection completion signal of the Bluetooth device is detected.

The timing module is configured to start timing from the moment when the reconnection completion signal is detected when it is determined that the Bluetooth device is the Bluetooth reconnection delay device.

The request sending module is configured to initiate a media audio protocol reconnection request after a preset time period from the moment when the reconnection completion signal is detected, the preset time period being less than a standard reconnection time interval.

There is provided a terminal including a memory and a processor. The memory stores computer executable instructions thereon. When executing the computer executable instructions, the processor implements steps of the abovementioned method.

There is provided a non-volatile computer readable storage medium having stored thereon computer executable instructions that when executed by a processor, implement steps of the abovementioned method.

According to the method and device for reconnection of a Bluetooth device, the terminal and the computer readable storage medium, when the reconnection completion signal of the Bluetooth device is detected, first it is determined whether it is the Bluetooth reconnection delay device. If yes, from the moment when the reconnection completion signal of the Bluetooth device is detected, the setting that the media audio protocol reconnection request needs to be initiated after waiting for the standard reconnection time interval is adjusted to the preset time period, and the media audio protocol reconnection request is initiated after the preset time period. Herein, the preset time period is less than the standard reconnection time interval. By means of the above method, the time interval from the successful reconnection of the call audio protocol to the initiation of the media audio protocol reconnection request in the reconnection process of the Bluetooth device belonging to the Bluetooth reconnection delay device is adjusted to the preset time period, so that the reconnection time of the Bluetooth device may be reduced.

### BRIEF DESCRIPTION OF THE DRAWINGS

FIG. 1 is an application environment diagram of a method for reconnection of a Bluetooth device in an embodiment.
FIG. 2 is a flowchart of a method for reconnection of a Bluetooth device in an embodiment.
FIG. 3 is a flowchart of performing a reconnection characteristic test on a Bluetooth device and obtaining a result of the reconnection characteristic test in an embodiment.
FIG. 4 is a flowchart of a method for reconnection of a Bluetooth device in another embodiment.
FIG. 5 is a flowchart of a method for reconnection of a Bluetooth device in a specific embodiment.
FIG. 6 is a flow chart of steps of a reconnection characteristic test in a specific embodiment.
FIG. 7 is a structural block diagram of a Bluetooth device reconnection device for a reconnection characteristic test in an embodiment.
FIG. 8 is an internal structural diagram of a terminal in an embodiment.

### DETAILED DESCRIPTION

To make the objectives, technical solutions, and advantages of the present disclosure clearer, the present disclosure is described below in detail with reference to the accompanying drawings and embodiments. It is to be understood that the specific embodiments described herein are only used to explain the present disclosure, and are not used to limit the present disclosure.

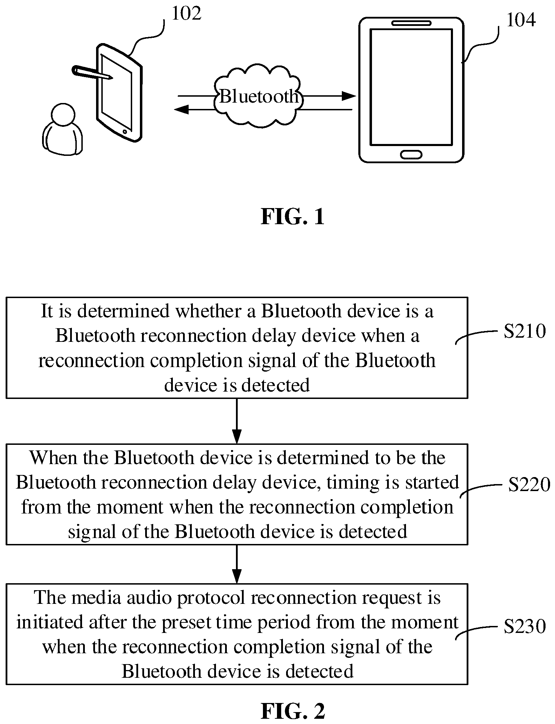

The method for reconnection of a Bluetooth device provided in the present disclosure may be applied to the present disclosure environment as illustrated in FIG. 1. A terminal 102 communicates with a Bluetooth device 104 through Bluetooth technology. When receiving a reconnection request of the Bluetooth device 104, the terminal 102 first determines whether the Bluetooth device is a Bluetooth reconnection delay device. If the Bluetooth device is a Bluetooth reconnection delay device, the terminal initiates a media audio protocol reconnection request after a preset time period from the moment when a reconnection completion signal of the Bluetooth device is detected. Here the preset time period is less than a standard reconnection time interval. The terminal 102 may be, but is not limited to, various personal computers, notebook computers, smart phones, tablet computers and portable wearable devices, and the Bluetooth device 104 may be, but is not limited to, a Bluetooth earphone, a vehicle-mounted Bluetooth, and the like.

In an embodiment, as illustrated in FIG. 2, a method for reconnection of a Bluetooth device is provided. Description is made by applying the method to the terminal in FIG. 1 as an example. The method includes steps S210 to S230.

At S210, it is determined whether the Bluetooth device is a Bluetooth reconnection delay device when the reconnection completion signal of the Bluetooth device is detected.

A device with a Bluetooth function is the Bluetooth device. When the Bluetooth device is disconnected from the originally connected device and then reconnected, it is called reconnection of the Bluetooth device. The Bluetooth reconnection includes a reconnection call audio protocol, a reconnection media audio protocol and so on. Usually, the Bluetooth device may actively reconnect a communication audio protocol, but in the reconnection of some Bluetooth devices, the reconnection request of the media audio protocol needs to be initiated through the terminal. A first kind is a Bluetooth device that may only actively initiate connecting the call audio protocol of the terminal Bluetooth: the terminal may initiate a waiting time of the standard reconnection time interval after the call audio protocol is successfully connected. After a timer of the standard reconnection time interval expires, the reconnection request of connecting the media audio protocol of the Bluetooth device is actively initiated. A second kind is a Bluetooth device which may reconnect a control channel of the media audio of the terminal Bluetooth in addition to reconnecting the call audio protocol of the terminal Bluetooth: the terminal may initiate the waiting time of the standard reconnection time interval after the control channel of the media audio is successfully connected. After the timer of the standard reconnection time interval expires, the reconnection request of connecting the media audio protocol of the Bluetooth earphone is actively initiated.

The standard reconnection time interval indicates the time interval from the last node where the terminal initiated the media audio protocol reconnection request (the moment when the Bluetooth device actively reconnected the call audio protocol successfully, or the moment when the Bluetooth device actively reconnected a media audio control channel successfully) to a time point when the media audio protocol reconnection request was initiated under a normal circumstance. The size of the standard reconnection time interval is related to the type of the Bluetooth device and the configuration of the terminal. The standard reconnection time intervals of the terminal during the Bluetooth reconnection of the first type and the second type may be the same or different. In a specific embodiment, in an embodiment of a reconnection process of the Bluetooth device that may actively reconnect the media audio control channel of the terminal, the standard reconnection time interval of the terminal is 6 seconds, which is counted from the moment when the terminal detects the successful reconnection of the media audio control channel. In an embodiment of a reconnection process of the Bluetooth device that only actively reconnects the call audio protocol of the terminal, the standard reconnection time interval of the terminal is 2 seconds, which is counted from the moment when it is detected that the Bluetooth device actively reconnects the media audio control channel successfully.

In the present disclosure, the Bluetooth device may be the Bluetooth earphone, a vehicle-mounted terminal, and the like. In an embodiment, when it is detected that the Bluetooth device completes the active reconnection of the call audio protocol, it is determined that the reconnection completion signal of the Bluetooth device is detected. Alternatively, in another embodiment, when it is detected that the Bluetooth device completes the active reconnection of the media audio control channel, it is determined that the reconnection completion signal of the Bluetooth device is detected.

In the embodiment, the Bluetooth device with a Bluetooth reconnection delay characteristic is recorded as the Bluetooth reconnection delay device. In an embodiment, a Bluetooth reconnection characteristic test is performed on the Bluetooth device, and it is determined whether the Bluetooth device has the Bluetooth reconnection delay characteristic according to a result of the reconnection characteristic test obtained from the test.

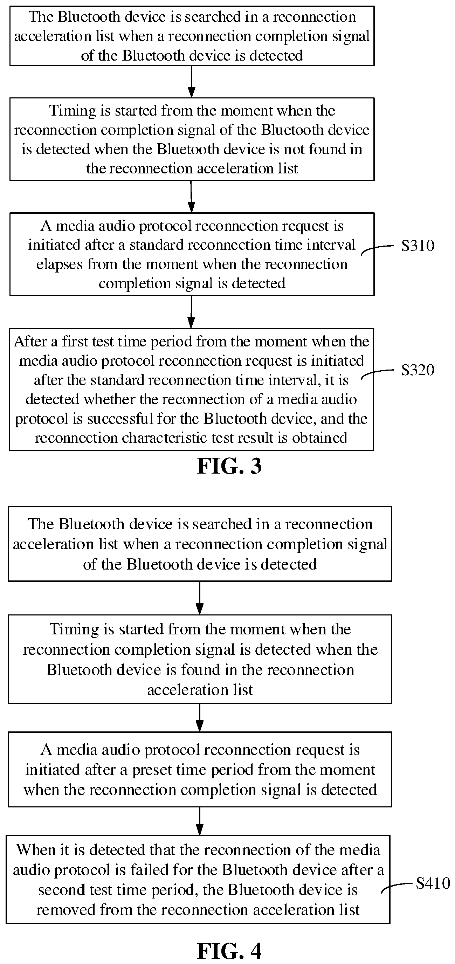

Further, in an embodiment, a reconnection characteristic test is performed on the Bluetooth device, and the obtained result of the reconnection characteristic test is as illustrated in FIG. 3, including S310 and S320.

At S310, a media audio protocol reconnection request is initiated after the standard reconnection time interval from the moment when the reconnection completion signal is detected.

At S320, after a first test time period from the moment when the media audio protocol reconnection request is initiated, it is detected whether the reconnection of the media audio protocol is successful for the Bluetooth device, and the result of the reconnection characteristic test is obtained.

The reconnection characteristic test is performed on the Bluetooth device. The reconnection between the Bluetooth device and the terminal needs to be tested once. Specifically, the terminal may initiate the media audio protocol reconnection request after the standard reconnection time interval from the moment when it detects the reconnection completion signal of the Bluetooth device, and then start timing from the initiation of the media audio protocol reconnection request and test whether the media audio protocol between the terminal and the Bluetooth device is successfully connected after the first test time period.

Furthermore, in an embodiment, when the successful reconnection of the media audio protocol of the Bluetooth device is detected after the first test time period from the moment when the reconnection request of the media audio protocol is initiated after the standard reconnection time interval, it is determined that the Bluetooth device has the reconnection delay characteristic according to the result of the reconnection characteristic test. It is to be understood that when it is detected that the reconnection of the media audio protocol is failed for the Bluetooth device after the first test time period from the moment when the media audio protocol reconnection request is initiated after the standard reconnection time interval, it is determined that the Bluetooth device does not have the reconnection delay characteristic according to the result of the reconnection characteristic test.

The first test time period may be set according to an actual situation. The first test time period may be 500ms-10s. Specifically, the first test time period is 3 seconds.

In an embodiment, after it is determined that the Bluetooth device has the reconnection delay characteristic according to the result of the reconnection characteristic test, the Bluetooth device is added to a reconnection acceleration list. Further, adding the Bluetooth device to the reconnection acceleration list may be adding the address or name of the Bluetooth device to the reconnection acceleration list. The reconnection acceleration list is configured to store the Bluetooth device with the Bluetooth reconnection delay characteristic. The Bluetooth device with the Bluetooth reconnection delay characteristic is the Bluetooth reconnection delay device.

In the embodiment, the operation of determining whether the Bluetooth device is the Bluetooth reconnection delay device includes the operations of searching for the Bluetooth device in the reconnection acceleration list, and when the Bluetooth device is found in the reconnection acceleration list, determining that the Bluetooth device is the Bluetooth reconnection delay device. Further, the operation of searching for the Bluetooth device in the reconnection acceleration list includes an operation of searching whether the same address or name exists in the reconnection acceleration list by means of the address or name of the Bluetooth device.

The address of each Bluetooth device is unique, and therefore the Bluetooth device may be searched in the reconnection acceleration list by means of the address of the Bluetooth device. It is to be noted that when searching in the reconnection acceleration list by means of the name of the Bluetooth device, the name of the Bluetooth device needs to be guaranteed to be unique among all Bluetooth devices, and the name of the Bluetooth device does not change during two-time reconnection. It is to be understood that it may also be realized by other means to determine whether the Bluetooth device is the Bluetooth reconnection delay device.

At S220, when it is determined that the Bluetooth device is the Bluetooth reconnection delay device, timing is started from the moment when the reconnection completion signal of the Bluetooth device is detected.

At S210, it is inquired whether the Bluetooth device is the Bluetooth reconnection delay device. The step S220 is executed when it is determined that the Bluetooth device is the Bluetooth reconnection delay device.

In an embodiment, when it is detected that the Bluetooth device completes the active reconnection of the call audio protocol, it is determined that the reconnection completion signal of the Bluetooth device is detected. Or, in another embodiment, when it is detected that the Bluetooth device completes the active reconnection of the media audio control channel, it is determined that the reconnection completion signal of the Bluetooth device is detected.

Further, when the Bluetooth device actively reconnects the successful reconnection with the call audio protocol of the terminal, a call audio protocol reconnection success flag is set in the terminal. When the terminal detects the call audio protocol reconnection success flag, it is determined that the reconnection completion signal of the Bluetooth device is detected; and the time of the call audio protocol reconnection success flag is determined to be the moment when the reconnection completion signal of the Bluetooth device is detected. It is to be understood that when the Bluetooth device actively reconnects the successful reconnection with the media audio control channel of the terminal, a media audio control channel reconnection success flag is set in the terminal. When the terminal detects the media audio control channel reconnection success flag, it is determined that the reconnection completion signal of the Bluetooth device is detected; and the time of the media audio control channel reconnection success flag is determined to be the moment when the reconnection completion signal of the Bluetooth device is detected. It may also be determined by other realizable ways that the successful reconnection of the call audio protocol of the Bluetooth device is detected.

At S230, the media audio protocol reconnection request is initiated after the preset time period from the moment when the reconnection completion signal of the Bluetooth device is detected.

The preset time period is less than the standard reconnection time interval. The standard reconnection time interval indicates the time interval from the last time node when the terminal initiated the media audio protocol reconnection request to the time point when the media audio protocol reconnection request is initiated under the normal circumstance. The last node when the media audio protocol reconnection request was initiated may be the time point when the Bluetooth device successfully completes the active reconnection of the communication audio protocol, or the time point when the Bluetooth device completes the active reconnection of the media audio control channel. Specifically, in the reconnection process of the Bluetooth device that may actively reconnect the media audio control channel of the terminal, the standard reconnection time interval of the terminal may be 6 seconds, which is counted from the moment when the terminal detects the successful reconnection of the media audio control channel. In the reconnection process of the Bluetooth device that only actively reconnects the call audio protocol of the terminal, the standard reconnection time interval of the terminal may be 2 seconds, which is counted from the moment when the terminal detects the successful reconnection of the call audio protocol. The value of the preset time period may be set according to the actual situation of the standard reconnection time interval. Specifically, the preset time period is 1 second.

The media audio protocol reconnection request is initiated by the terminal, and is used to request reconnection of the media audio protocol with the Bluetooth device. A call audio reconnection request for requesting a reconnection of the call audio protocol is initiated by the Bluetooth device. In practice, there is a time interval between the successful reconnection of the call audio protocol and the initiation of the media audio protocol reconnection request by the terminal. In a related art, after detecting the reconnection completion signal of the Bluetooth device, the terminal may initiate the media audio protocol reconnection request again after the standard reconnection time interval. However, the terminal adjusts the standard reconnection time interval to the preset time period less than the standard reconnection time interval after determining that the Bluetooth device is the reconnection delay device. That is, after detecting the reconnection completion signal of the Bluetooth device, the terminal initiates a media audio protocol reconnection request to the Bluetooth device after the preset time period, thereby shortening the time spent in the reconnection process between the Bluetooth device and the terminal.

Further, after the media audio protocol reconnection request is initiated, the Bluetooth device is enabled to reconnect the media audio protocol with the terminal. Herein, the call audio protocol, the media audio control channel and the media audio protocol between the reconnection terminal and the Bluetooth device may be realized in any manner.

According to the method for reconnection of a Bluetooth device, when the reconnection completion signal of the Bluetooth device is detected, first it is determined whether it is the Bluetooth reconnection delay device. If yes, from the moment when the reconnection completion signal of the Bluetooth device is detected, the setting that the media audio protocol reconnection request needs to be initiated after waiting for the standard reconnection time interval is adjusted to the preset time period, and the media audio protocol reconnection request is initiated after the preset time period. Herein, the preset time period is less than the standard reconnection time interval. By means of the above method, the time interval from the successful reconnection of the call audio protocol to the initiation of the media audio protocol reconnection request in the reconnection process of the Bluetooth device belonging to the Bluetooth reconnection delay device is adjusted to the preset time period, so that the reconnection time of the Bluetooth device may be reduced.

In an embodiment, the method for reconnection of a Bluetooth device further includes a step of performing the reconnection characteristic test on the Bluetooth device and obtaining the result of the reconnection characteristic test when the Bluetooth device is not found in the reconnection acceleration list.

In the embodiment, it may be the first time that the Bluetooth device is reconnected to the terminal, that is, the terminal is not clear whether the Bluetooth device has the Bluetooth reconnection delay characteristic, so when the corresponding Bluetooth device is not found in the reconnection acceleration list, the reconnection characteristic test is performed on the Bluetooth device. Further, if it is detected that the Bluetooth device has the Bluetooth reconnection delay characteristic, the Bluetooth device is added to the reconnection acceleration list.

In an embodiment, as illustrated in FIG. 4, the method for reconnection of a Bluetooth device further includes step S410: when it is detected that the reconnection of the media audio protocol is failed for the Bluetooth device after a second test time period from the moment when the media audio protocol reconnection request is initiated after the preset time period, the Bluetooth device is removed from the reconnection acceleration list.

After the standard reconnection time interval is adjusted to the preset time period and the terminal detects the reconnection completion signal of the Bluetooth device, it initiates the media audio protocol reconnection request after the preset time period; and then the reconnection of the media audio protocol between the terminal and the Bluetooth device is detected after the second test time period. If it is detected that the media audio protocol between the terminal and the Bluetooth device is not successfully reconnected at the moment, it indicates that the manner of adjusting the standard reconnection time interval to the preset time period is not applicable to the Bluetooth device, and then the Bluetooth device is removed from the reconnection acceleration list. In this way, the success rate of reconnection of the Bluetooth device by using the above method may be improved.

The second test time period may be set according to an actual situation. The second test time period may be 500ms-10s. Specifically, the second test time period is 3 seconds.

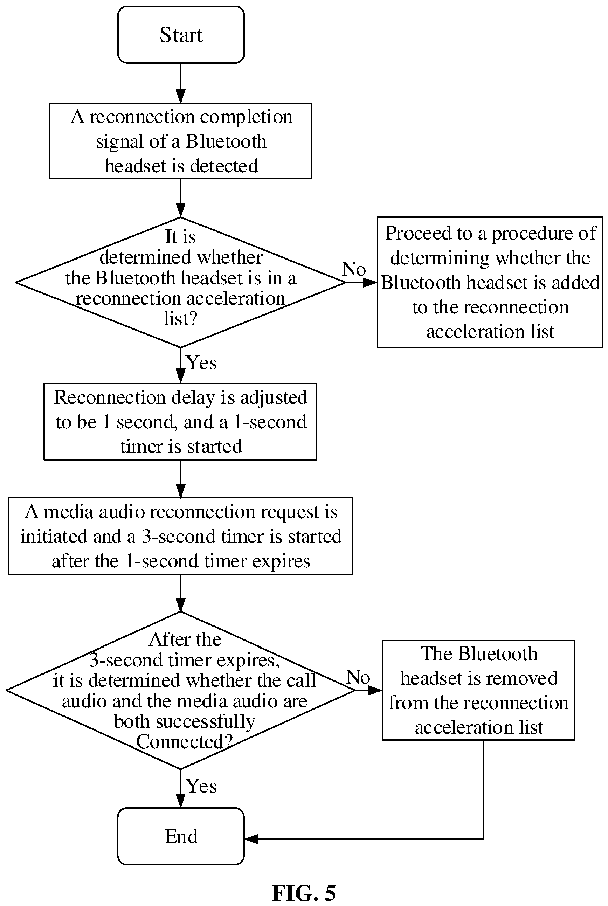

In a specific embodiment, as illustrated in FIG. 5, it is the flowchart of the method for reconnection of a Bluetooth device in the embodiment. The Bluetooth earphone is used as the Bluetooth device, the preset time period being set to 1 second, and the first test time period and the second test time period being both set to 3 seconds.

When the Bluetooth earphone initiates the reconnection request, the terminal may determine whether the Bluetooth earphone is in the reconnection acceleration list. If the Bluetooth earphone is in the reconnection acceleration list, it indicates that the Bluetooth earphone is a Bluetooth earphone with the reconnection delay characteristic. At this time, the terminal adjusts the reconnection delay to 1 second. That is, after detecting the reconnection completion signal of the Bluetooth earphone (the Bluetooth device actively reconnects the call audio protocol successfully, or the Bluetooth device actively reconnects the media audio control channel successfully), a one-second timer is started. After the one-second timer expires, the media audio protocol reconnection request is initiated by the terminal.

If the Bluetooth earphone is not in the reconnection acceleration list, a step of performing the reconnection characteristic test for determining whether the Bluetooth earphone has the reconnection delay characteristic is performed.

Further, after the terminal initiates the media audio protocol reconnection request, a 3-second timer is started. After the 3-second timer expires, it is determined whether both the call audio protocol and the media audio protocol are successfully connected. If yes, the Bluetooth device reconnection is finished. Otherwise, the Bluetooth earphone is removed from the reconnection acceleration list.

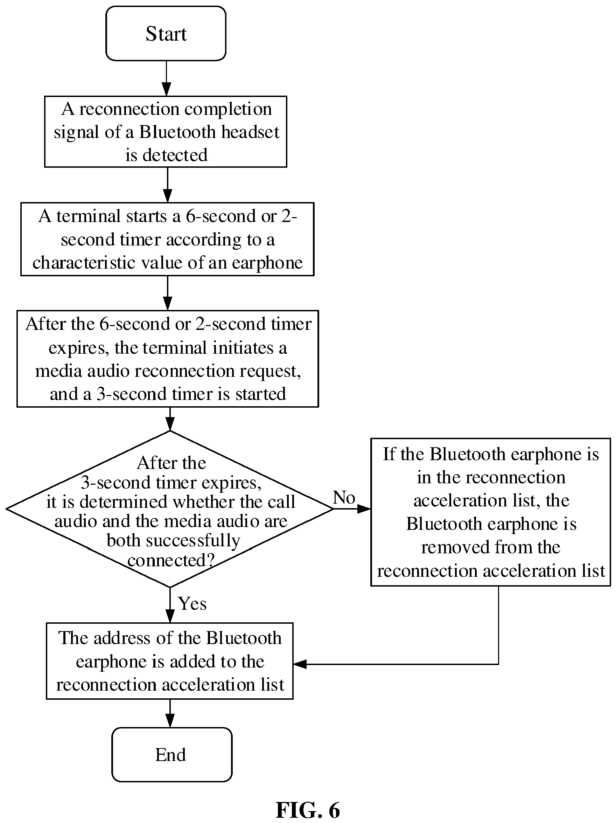

As illustrated in FIG. 6, the reconnection characteristic test in an embodiment includes the following steps.

The Bluetooth earphone is reconnected. When it is detected that the Bluetooth earphone actively reconnects the call audio successfully or the Bluetooth earphone actively reconnects the media audio control channel successfully, the terminal may start a 6-second or 2-second timer according to different earphone characteristics (for example, according to a characteristic value of the Bluetooth earphone). If the Bluetooth earphone only actively reconnects the call audio protocol, the 6-second timer is started. If the Bluetooth earphone not only actively reconnects the call audio protocol, but also actively reconnects the media audio protocol control channel, the 2-second timer is started.

When the 6-second or 2-second timer expires, the terminal initiates the media audio protocol reconnection request. At the same time, the terminal will start the 3-second timer. When the 3-second timer expires, the terminal determines whether the call audio protocol and the media audio protocol of the Bluetooth earphone are successfully connected. If they are both connected successfully, it indicates that the Bluetooth earphone belongs to the earphone with the reconnection delay characteristic. The address or name of the Bluetooth earphone is added to the reconnection acceleration list. If only the call audio protocol is successfully connected, it indicates that the Bluetooth earphone does not have the earphone reconnection delay characteristic, so the Bluetooth earphone cannot be added to the reconnection acceleration list. If the Bluetooth earphone already exists in the reconnection acceleration list, the Bluetooth earphone is removed from the reconnection acceleration list.

According to the method for reconnection of a Bluetooth device, intelligent optimization is performed for the Bluetooth devices with different characteristics, and the reconnection time between the Bluetooth device and the terminal is reduced. The solution of reconnection optimization may be realized only at the terminal without adjusting the existing Bluetooth device.

It is to be understood that although the steps in the flowcharts of FIGS. 2-5 are displayed in sequence as indicated by the arrows, these steps are not necessarily executed in sequence as indicated by the arrows. Unless explicitly stated herein, the execution of these steps is not strictly limited in sequence, and these steps may be executed in other sequences. Moreover, at least a part of the steps in FIGS. 2-5 may include a plurality of sub-steps or stages. These sub-steps or stages may not necessarily be completed at the same time, but may be executed at different times. The execution sequence of these sub-steps or stages may not necessarily be performed sequentially, but may be executed in turn or alternately with other steps or at least a part of sub-steps or stages of other steps.

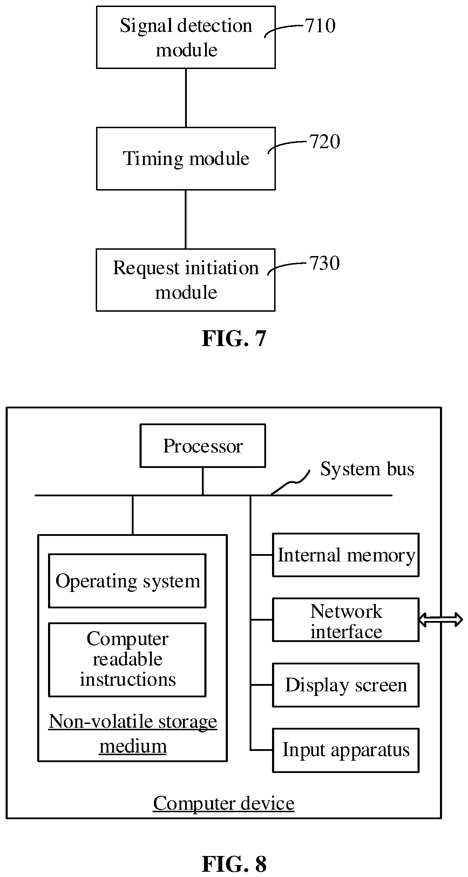

In an embodiment, as illustrated in FIG. 7, a device for reconnection of a Bluetooth device is provided, which includes a signal detection module 710, a timing module 720 and a request initiation module 730.

The signal detection module 710 is configured to determine whether the Bluetooth device is the Bluetooth reconnection delay device when the reconnection completion signal of the Bluetooth device is detected.

The timing module 720 is configured to start timing from the moment when the reconnection completion signal is detected when it is determined that the Bluetooth device is the Bluetooth reconnection delay device.

The request sending module 730 is configured to initiate the media audio protocol reconnection request after the preset time period from the moment when the reconnection completion signal is detected. The preset time period is less than the standard reconnection time interval.

Specific limitations about the device for reconnection of a Bluetooth device may refer to limitations to the method for reconnection of a Bluetooth device, which will not be elaborated here. Various modules in the above device for reconnection of a Bluetooth device may be implemented by software, hardware or a combination thereof totally or partially. Various modules may be embedded into or dependent from a processor of the terminal in the form of hardware, and may also be stored in the memory of the terminal in the form of software, in order that the processor calls to perform the operation corresponding to each module.

In an embodiment, a terminal is provided. The terminal may be a terminal, and an internal structure diagram of the terminal may be as illustrated in FIG. 8. The terminal includes a processor, a memory, a network interface, a display screen, and an input apparatus connected by a system bus. The processor of the terminal is configured to provide computing and control capabilities. The memory of the terminal includes a non-volatile storage medium and an internal memory. The non-volatile storage medium stores an operating system and a computer readable instruction. The internal memory provides an environment for the operation of the operating system and the computer readable instruction in the non-volatile storage medium. The network interface of the terminal is used for communicating with an external terminal through a network connection. The computer readable instruction is executed by the processor to implement a method for reconnection of a Bluetooth device. The display screen of the terminal may be a liquid crystal display screen or an electronic ink display screen. The input apparatus of the computer device may be a touch screen covering the display screen or may be a button, a trackball or a trackpad disposed on a housing of the computer device, or may also be an external keyboard, trackpad or mouse.

A person skilled in the art may understand that the structure illustrated in FIG. 8 is only a partial structure block diagram associated with the solution of the present disclosure, and is not limitative to the terminal to which the solution of the present disclosure is applied, and specifically, the terminal may include parts more or fewer than those illustrated in the figure, or combine some parts, or have different part arrangements.

In an embodiment, a terminal is provided, which includes a memory and a processor, where the memory stores a computer readable instruction, and the processor, when executing the computer readable instruction, implements the following steps.

Whether the Bluetooth device is the Bluetooth reconnection delay device is determined when the reconnection completion signal of the Bluetooth device is detected.

When it is determined that the Bluetooth device is the Bluetooth reconnection delay device, timing is started from the moment when the reconnection completion signal is detected.

The media audio protocol reconnection request is initiated after the preset time period from the moment when the reconnection completion signal is detected. The preset time period is less than the standard reconnection time interval.

In an embodiment, the processor, when executing the computer readable instruction, further implements the following steps: when it is detected that the Bluetooth device completes the active reconnection of the call audio protocol, or when it is detected that the Bluetooth device completes the active reconnection of the media audio control channel, it is determined that the reconnection completion signal of the Bluetooth device is detected.

In an embodiment, the processor, when executing the computer readable instructions, further implements the following step: the operation of determining whether the Bluetooth device is the Bluetooth reconnection delay device includes the operation of searching for the Bluetooth device in the reconnection acceleration list. The reconnection acceleration list is configured to store the Bluetooth device information of Bluetooth reconnection delay devices.

When the Bluetooth device is found in the reconnection acceleration list, it is determined that the Bluetooth device is the Bluetooth reconnection delay device.

In an embodiment, the processor, when executing the computer readable instructions, implements the following steps.

The reconnection characteristic test is performed on the Bluetooth device and the result of the reconnection characteristic test is obtained when the Bluetooth device is not found in the reconnection acceleration list.

When it is determined that the Bluetooth device has the reconnection delay characteristic according to the result of the reconnection characteristic test, the Bluetooth device is added to the reconnection acceleration list.

In an embodiment, the processor, when executing the computer readable instruction, further implements the following steps.

The operation of performing the reconnection characteristic test on the Bluetooth device and obtaining the result of the reconnection characteristic test includes the following operations.

The media audio protocol reconnection request is initiated after the standard reconnection time interval from the moment when the reconnection completion signal of the Bluetooth device is detected.

After the first test time period from the moment when the media audio protocol reconnection request is initiated after the standard reconnection time interval, it is detected whether the reconnection of the media audio protocol is successful for the Bluetooth device, and the result of the reconnection characteristic test is obtained.

In an embodiment, the processor, when executing the computer readable instruction, further implements the following steps.

When it is detected that the reconnection of the media audio protocol is successful for the Bluetooth device after the first test time period from the moment when the media audio protocol reconnection request is initiated after the standard reconnection time interval, it is determined that the Bluetooth device has the reconnection delay characteristic according to the result of the reconnection characteristic test.

When it is detected that the reconnection of the media audio protocol is failed for the Bluetooth device after the first test time period from the moment when the media audio protocol reconnection request is initiated after the standard reconnection time interval, it is determined that the Bluetooth device does not have the reconnection delay characteristic according to the result of the reconnection characteristic test.

The processor, when executing the computer readable instruction, further implements the following steps.

When it is detected that the reconnection of the media audio protocol is failed for the Bluetooth device after the second test time period from the moment when the media audio protocol reconnection request is initiated after the preset time period, the Bluetooth device is removed from the reconnection acceleration list.

In an embodiment, a non-volatile computer readable storage medium is provided, which may store the computer executable instructions thereon; and when executed by the processor, the computer readable instructions implement the following steps.

Whether the Bluetooth device is the Bluetooth reconnection delay device is determined when the reconnection completion signal of the Bluetooth device is detected.

When it is determined that the Bluetooth device is the Bluetooth reconnection delay device, timing is started from the moment when the reconnection completion signal is detected.

The media audio protocol reconnection request is initiated after the preset time period from the moment when the reconnection completion signal is detected. The preset time period is less than the standard reconnection time interval.

In an embodiment, when executed by the processor, the computer readable instruction further implements the following steps: when it is detected that the Bluetooth device completes the active reconnection of the call audio protocol, or when it is detected that the Bluetooth device completes the active reconnection of the media audio control channel, it is determined that the reconnection completion signal of the Bluetooth device is detected.

In an embodiment, when executed by the processor, the computer readable instruction further implements the following step: the operation of determining whether the Bluetooth device is the Bluetooth reconnection delay device includes the operation of searching for the Bluetooth device in the reconnection acceleration list. The reconnection acceleration list is configured to store the Bluetooth device information of Bluetooth reconnection delay devices.

When the Bluetooth device is found in the reconnection acceleration list, it is determined that the Bluetooth device is the Bluetooth reconnection delay device.

In an embodiment, when executed by the processor, the computer readable instruction further implements the following steps: the reconnection characteristic test is performed on the Bluetooth device and the result of the reconnection characteristic test is obtained when the Bluetooth device is not found in the reconnection acceleration list.

When it is determined that the Bluetooth device has the reconnection delay characteristic according to the result of the reconnection characteristic test, the Bluetooth device is added to the reconnection acceleration list.

In an embodiment, when executed by the processor, the computer readable instruction further implements the following step: the operation of performing the reconnection characteristic test on the Bluetooth device and obtaining the result of the reconnection characteristic test includes the following operations.

The media audio protocol reconnection request is initiated after the standard reconnection time interval from the moment when the reconnection completion signal of the Bluetooth device is detected.

After the first test time period from the moment when the media audio protocol reconnection request is initiated after the standard reconnection time interval, it is detected whether the reconnection of the media audio protocol is successful for the Bluetooth device, and the result of the reconnection characteristic test is obtained.

In an embodiment, when executed by the processor, the computer readable instruction further implements the following steps: when it is detected that the reconnection of the media audio protocol is successful for the Bluetooth device after the first test time period from the moment when the media audio protocol reconnection request is initiated after the standard reconnection time interval, it is determined that the Bluetooth device has the reconnection delay characteristic according to the result of the reconnection characteristic test.

When it is detected that the reconnection of the media audio protocol is failed for the Bluetooth device after the first test time period from the moment when the media audio protocol reconnection request is initiated after the standard reconnection time interval, it is determined that the Bluetooth device does not have the reconnection delay characteristic according to the result of the reconnection characteristic test.

When executed by the processor, the computer readable instruction further implements the following steps: when it is detected that the reconnection of the media audio protocol is failed for the Bluetooth device after the second test time period from the moment when the media audio protocol reconnection request is initiated after the preset time period, the Bluetooth device is removed from the reconnection acceleration list.

Those skilled in the art can understand that all or part of the processes in the above method embodiments may be implemented by the computer readable instruction to instruct related hardware, and the computer readable instruction may be stored in a non-volatile computer-readable storage medium. When the computer readable instruction is executed, the flow of each method embodiment as described above may be included. Any reference used in various embodiments of the present disclosure to a memory, storage, a database or other media may include non-volatile and/or volatile memories.

The scope of protection of the patent for the present disclosure shall be subject to the appended claims.

## Claims

1. A method for reconnection of a Bluetooth device, **characterized by** comprising:
determining (S210) whether the Bluetooth device is a Bluetooth reconnection delay device when a reconnection completion signal of the Bluetooth device is detected, wherein the Bluetooth reconnection delay device is a Bluetooth device with a Bluetooth reconnection delay characteristic, the Bluetooth device is determined as having the reconnection delay characteristic responsive to a success result of a media audio protocol reconnection;
starting (S220) timing from a moment when the reconnection completion signal is detected when it is determined that the Bluetooth device is the Bluetooth reconnection delay device; and
initiating (S230) a media audio protocol reconnection request after a preset time period from the moment when the reconnection completion signal is detected, the preset time period being less than a standard reconnection time interval.

2. The method of claim 1, wherein when it is detected that the Bluetooth device completes active reconnection of a call audio protocol, or when it is detected that the Bluetooth device completes active reconnection of a media audio control channel, it is determined that the reconnection completion signal of the Bluetooth device is detected.

3. The method of claim 1, wherein determining (S210) whether the Bluetooth device is the Bluetooth reconnection delay device comprises: searching for the Bluetooth device in a reconnection acceleration list, the reconnection acceleration list being configured to store Bluetooth device information of Bluetooth reconnection delay devices; and
determining that the Bluetooth device is the Bluetooth reconnection delay device when the Bluetooth device is found in the reconnection acceleration list.

4. The method of claim 3, further comprising:
performing a reconnection characteristic test on the Bluetooth device and obtaining a result of the reconnection characteristic test when the Bluetooth device is not found in the reconnection acceleration list; and
adding the Bluetooth device to the reconnection acceleration list when it is determined that the Bluetooth device has a reconnection delay characteristic according to the result of the reconnection characteristic test.

5. The method of claim 4, wherein performing the reconnection characteristic test on the Bluetooth device and obtaining the result of the reconnection characteristic test comprises:
initiating a media audio protocol reconnection request, after the standard reconnection time interval from a moment when the reconnection completion signal of the Bluetooth device is detected; and
detecting whether reconnection of a media audio protocol is successful for the Bluetooth device and obtaining the result of the reconnection characteristic test, after a first test time period from a moment when the media audio protocol reconnection request is initiated after the standard reconnection time interval.

6. The method of claim 5, wherein
when it is detected that the reconnection of the media audio protocol is successful for the Bluetooth device after the first test time period from a moment when the media audio protocol reconnection request is initiated after the standard reconnection time interval, it is determined that the Bluetooth device has the reconnection delay characteristic according to the result of the reconnection characteristic test;
wherein when it is detected that the reconnection of the media audio protocol is failed for the Bluetooth device after the first test time period from the moment when the media audio protocol reconnection request is initiated after the standard reconnection time interval, it is determined that the Bluetooth device does not have the reconnection delay characteristic according to the result of the reconnection characteristic test.

7. The method of any one of claims 3-6, further comprising:
removing the Bluetooth device from the reconnection acceleration list when it is detected that the reconnection of the media audio protocol is failed for the Bluetooth device after a second test time period from a moment when the media audio protocol reconnection request is initiated after the preset time period.

8. A device for reconnection of a Bluetooth device, **characterized by** comprising:
a signal detection module (710), configured to determine whether the Bluetooth device is a Bluetooth reconnection delay device when a reconnection completion signal of the Bluetooth device is detected, wherein the Bluetooth reconnection delay device is a Bluetooth device with a Bluetooth reconnection delay characteristic, the Bluetooth device is determined as having the reconnection delay characteristic responsive to a success result of a media audio protocol reconnection;
a timing module (720), configured to start timing from a moment when the reconnection completion signal is detected when it is determined that the Bluetooth device is the Bluetooth reconnection delay device; and
a request sending module (730), configured to initiate a media audio protocol reconnection request, after a preset time period from the moment when the reconnection completion signal is detected, the preset time period being less than a standard reconnection time interval.

9. A terminal, **characterized by** comprising a processor and a memory having stored thereon computer executable instructions that when executed by the processor, implement steps of
determining whether a Bluetooth device is a Bluetooth reconnection delay device when a reconnection completion signal of the Bluetooth device is detected, wherein the Bluetooth reconnection delay device is a Bluetooth device with a Bluetooth reconnection delay characteristic, the Bluetooth device is determined as having the reconnection delay characteristic responsive to a success result of a media audio protocol reconnection;
starting timing from a moment when the reconnection completion signal is detected when it is determined that the Bluetooth device is the Bluetooth reconnection delay device; and
initiating a media audio protocol reconnection request, after a preset time period from the moment when the reconnection completion signal is detected, the preset time period being less than a standard reconnection time interval.

10. The terminal of claim 9, wherein when executing the computer executable instructions, the processor further implements a step of:
determining that the reconnection completion signal of the Bluetooth device is detected, when it is detected that the Bluetooth device completes active reconnection of a call audio protocol, or when it is detected that the Bluetooth device completes active reconnection of a media audio control channel.

11. The terminal of claim 9, wherein the processor executes the computer executable instructions to implement determining that the Bluetooth device is the Bluetooth reconnection delay device by steps of:
searching for the Bluetooth device in a reconnection acceleration list, the reconnection acceleration list being configured to store Bluetooth device information of Bluetooth reconnection delay devices; and
determining that the Bluetooth device is the Bluetooth reconnection delay device when the Bluetooth device is found in the reconnection acceleration list.

12. The terminal of claim 11, wherein when executing the computer executable instructions, the processor further implements steps of
performing a reconnection characteristic test on the Bluetooth device and obtaining a result of the reconnection characteristic test when the Bluetooth device is not found in the reconnection acceleration list; and
adding the Bluetooth device to the reconnection acceleration list when it is determined that the Bluetooth device has a reconnection delay characteristic according to the result of the reconnection characteristic test.

13. The method of claim 12, wherein the processor executes the computer readable instructions to implement performing the reconnection characteristic test on the Bluetooth device and obtaining the result of the reconnection characteristic test by steps of:
initiating a media audio protocol reconnection request, after the standard reconnection time interval from a moment when the reconnection completion signal of the Bluetooth device is detected; and
detecting whether reconnection of a media audio protocol is successful for the Bluetooth device and obtaining the result of the reconnection characteristic test, after a first test time period from a moment when the media audio protocol reconnection request is initiated after the standard reconnection time interval.

14. The terminal of claim 13, wherein when executing the computer executable instructions, the processor further implements steps of:
determining that the Bluetooth device has the reconnection delay characteristic according to the result of the reconnection characteristic test, when it is detected that the reconnection of the media audio protocol is successful for the Bluetooth device after the first test time period from the moment when the media audio protocol reconnection request is initiated after the standard reconnection time interval; and
determining that the Bluetooth device does not have the reconnection delay characteristic according to the result of the reconnection characteristic test, when it is detected that the reconnection of the media audio protocol is failed for the Bluetooth device after the first test time period from the moment when the media audio protocol reconnection request is initiated after the standard reconnection time interval.

15. A non-volatile computer readable storage medium having stored thereon computer executable instructions that when executed by a processor, implement steps of any one of claims 1-7.

## Patentansprüche

1. Verfahren zum erneuten Verbinden einer Bluetooth-Vorrichtung, **gekennzeichnet durch**:
Bestimmen (S210), ob eine Bluetooth-Vorrichtung eine Bluetooth-Neuverbindungsverzögerungsvorrichtung ist, wenn ein Neuverbindungsabschlusssignal der Bluetooth-Vorrichtung detektiert wird, wobei die Bluetooth-Neuverbindungsverzögerungsvorrichtung eine Bluetooth-Vorrichtung mit einer Bluetooth-Neuverbindungsverzögerungseigenschaft ist, wobei als Reaktion auf ein Erfolgsergebnis einer Medienaudioprotokollneuverbindung bestimmt wird, dass die Bluetooth-Vorrichtung die Neuverbindungsverzögerungseigenschaft besitzt;
Starten (S220) einer Zeitmessung ab einem Zeitpunkt, zu dem das Neuverbindungsabschlusssignal detektiert wird, wenn bestimmt wird, dass die Bluetooth-Vorrichtung die Bluetooth-Neuverbindungsverzögerungsvorrichtung ist; und Einleiten (S230) einer Medienaudioprotokoll-Neuverbindungsanforderung nach einer voreingestellten Zeitperiode ab dem Zeitpunkt, zu dem das Neuverbindungsabschlusssignal detektiert wird, wobei die voreingestellte Zeitperiode kleiner als ein Standardneuverbindungzeitintervall ist.

2. Verfahren nach Anspruch 1, wobei dann, wenn detektiert wird, dass die Bluetooth-Vorrichtung eine aktive Neuverbindung eines Anrufaudioprotokolls abschließt, oder wenn detektiert wird, dass die Bluetooth-Vorrichtung eine aktive Neuverbindung eines Medienaudiosteuerkanals abschließt, bestimmt wird, dass das Neuverbindungsabschlusssignal der Bluetooth-Vorrichtung detektiert wird.

3. Verfahren nach Anspruch 1, wobei das Bestimmen (S210), ob die Bluetooth-Vorrichtung die Bluetooth-Neuverbindungsverzögerungsvorrichtung ist, Folgendes umfasst: Suchen nach der Bluetooth-Vorrichtung in einer Neuverbindungsbeschleunigungsliste, wobei die Neuverbindungsbeschleunigungsliste konfiguriert ist, Bluetooth-Vorrichtungsinformationen von Bluetooth-Neuverbindungsverzögerungsvorrichtungen zu speichern; und
Bestimmen, dass die Bluetooth-Vorrichtung die Bluetooth-Neuverbindungsverzögerungsvorrichtung ist, wenn die Bluetooth-Vorrichtung in der Neuverbindungsbeschleunigungsliste gefunden wird.

4. Verfahren nach Anspruch 3, das ferner Folgendes umfasst:
Ausführen eines Neuverbindungseigenschaftstests an der Bluetooth-Vorrichtung und Erhalten eines Ergebnisses des Neuverbindungseigenschaftstests, wenn die Bluetooth-Vorrichtung nicht in der Neuverbindungsbeschleunigungsliste gefunden wird; und
Hinzufügen der Bluetooth-Vorrichtung zu der Neuverbindungsbeschleunigungsliste, wenn bestimmt wird, dass die Bluetooth-Vorrichtung gemäß dem Ergebnis des Neuverbindungseigenschaftstests eine Neuverbindungsverzögerungseigenschaft besitzt.

5. Verfahren nach Anspruch 4, wobei das Ausführen des Neuverbindungseigenschaftstests an der Bluetooth-Vorrichtung und das Erhalten des Ergebnisses des Neuverbindungseigenschaftstests Folgendes umfasst:
Einleiten einer Medienaudioprotokoll-Neuverbindungsanforderung nach dem Standardneuverbindungszeitintervall ab einem Zeitpunkt, zu dem das Neuverbindungsabschlusssignal der Bluetooth-Vorrichtung detektiert wird; und
Detektieren, ob eine Neuverbindung eines Medienaudioprotokolls für die Bluetooth-Vorrichtung erfolgreich ist, und Erhalten des Ergebnisses des Neuverbindungseigenschaftstests nach einer ersten Testzeitperiode ab einem Zeitpunkt, zu dem die Medienaudioprotokoll-Neuverbindungsanforderung nach dem Standardneuverbindungszeitintervall eingeleitet wird.

6. Verfahren nach Anspruch 5, wobei
dann, wenn detektiert wird, dass die Neuverbindung des Medienaudioprotokolls für die Bluetooth-Vorrichtung nach der ersten Testzeitperiode ab einem Zeitpunkt, zu dem die Medienaudioprotokoll-Neuverbindungsanforderung nach dem Standardneuverbindungszeitintervall eingeleitet wird, erfolgreich ist, bestimmt wird, dass die Bluetooth-Vorrichtung gemäß dem Ergebnis des Neuverbindungseigenschaftstests die Neuverbindungsverzögerungseigenschaft besitzt;
wobei dann, wenn detektiert wird, dass die Neuverbindung des Medienaudioprotokolls für die Bluetooth-Vorrichtung nach der ersten Testzeitperiode ab dem Zeitpunkt, zu dem die Medienaudioprotokoll-Neuverbindungsanforderung nach dem Standardneuverbindungszeitintervall eingeleitet wird, gescheitert ist, bestimmt wird, dass die Bluetooth-Vorrichtung gemäß dem Ergebnis des Neuverbindungseigenschaftstests nicht die Neuverbindungsverzögerungseigenschaft besitzt.

7. Verfahren nach einem der Ansprüche 3-6, das ferner Folgendes umfasst:
Entfernen der Bluetooth-Vorrichtung aus der Neuverbindungsbeschleunigungsliste, wenn detektiert wird, dass die Neuverbindung des Medienaudioprotokolls für die Bluetooth-Vorrichtung nach einer zweiten Testzeitperiode ab einem Zeitpunkt, zu dem die Medienaudioprotokoll-Neuverbindungsanforderung nach der voreingestellten Zeitperiode eingeleitet wird, gescheitert ist.

8. Vorrichtung für eine Neuverbindung einer Bluetooth-Vorrichtung, die **dadurch gekennzeichnet ist, dass** sie Folgendes umfasst:
ein Signaldetektionsmodul (710), das konfiguriert ist, zu bestimmen, ob die Bluetooth-Vorrichtung eine Bluetooth-Neuverbindungsverzögerungsvorrichtung ist, wenn ein Neuverbindungsabschlusssignal der Bluetooth-Vorrichtung detektiert wird, wobei die Bluetooth-Neuverbindungsverzögerungsvorrichtung eine Bluetooth-Vorrichtung mit einer Bluetooth-Neuverbindungsverzögerungseigenschaft ist, wobei als Reaktion auf ein Erfolgsergebnis einer Medienaudioprotokollneuverbindung bestimmt wird, dass die Bluetooth-Vorrichtung die Neuverbindungsverzögerungseigenschaft besitzt;
ein Zeitmodul (720), das konfiguriert ist, eine Zeitmessung ab einem Zeitpunkt, zu dem das Neuverbindungsabschlusssignal detektiert wird, zu starten, wenn bestimmt wird, dass die Bluetooth-Vorrichtung die Bluetooth-Neuverbindungsverzögerungsvorrichtung ist; und
ein Anforderungssendemodul (730), das konfiguriert ist, eine Medienaudioprotokoll-Neuverbindungsanforderung nach einer voreingestellten Zeitperiode ab dem Zeitpunkt, zu dem das Neuverbindungsabschlusssignal detektiert wird, einzuleiten, wobei die voreingestellte Zeitperiode kleiner als ein Standardneuverbindungzeitintervall ist.

9. Endgerät, **gekennzeichnet durch** einen Prozessor und einen Speicher, auf dem computerausführbare Anweisungen gespeichert sind, die dann, wenn sie durch den Prozessor ausgeführt werden, die folgenden Schritte implementieren:
Bestimmen, ob eine Bluetooth-Vorrichtung eine Bluetooth-Neuverbindungsverzögerungsvorrichtung ist, wenn ein Neuverbindungsabschlusssignal der Bluetooth-Vorrichtung detektiert wird, wobei die Bluetooth-Neuverbindungsverzögerungsvorrichtung eine Bluetooth-Vorrichtung mit einer Bluetooth-Neuverbindungsverzögerungseigenschaft ist, wobei als Reaktion auf ein Erfolgsergebnis einer Medienaudioprotokollneuverbindung bestimmt wird, dass die Bluetooth-Vorrichtung die Neuverbindungsverzögerungseigenschaft besitzt;
Starten einer Zeitmessung ab einem Zeitpunkt, zu dem das Neuverbindungsabschlusssignal detektiert wird, wenn bestimmt wird, dass die Bluetooth-Vorrichtung die Bluetooth-Neuverbindungsverzögerungsvorrichtung ist; und
Einleiten einer Medienaudioprotokoll-Neuverbindungsanforderung nach einer voreingestellten Zeitperiode ab dem Zeitpunkt, zu dem das Neuverbindungsabschlusssignal detektiert wird, wobei die voreingestellte Zeitperiode kleiner als ein Standardneuverbindungzeitintervall ist.

10. Endgerät nach Anspruch 9, wobei der Prozessor dann, wenn er die computerausführbaren Anweisungen ausführt, ferner einen Schritt implementiert zum:
Bestimmen, dass das Neuverbindungsabschlusssignal der Bluetooth-Vorrichtung detektiert wird, wenn detektiert wird, dass die Bluetooth-Vorrichtung eine aktive Neuverbindung eines Anrufaudioprotokolls abschließt, oder wenn detektiert wird, dass die Bluetooth-Vorrichtung eine aktive Neuverbindung eines Medienaudiosteuerkanals abschließt.

11. Endgerät nach Anspruch 9, wobei der Prozessor die computerausführbaren Anweisungen ausführt, um die Bestimmung, dass die Bluetooth-Vorrichtung die Bluetooth-Neuverbindungsverzögerungsvorrichtung ist, durch die folgenden Schritte zu implementieren:
Suchen nach der Bluetooth-Vorrichtung in einer Neuverbindungsbeschleunigungsliste, wobei die Neuverbindungsbeschleunigungsliste konfiguriert ist, Bluetooth-Vorrichtungsinformationen von Bluetooth-Neuverbindungsverzögerungsvorrichtungen zu speichern; und
Bestimmen, dass die Bluetooth-Vorrichtung die Bluetooth-Neuverbindungsverzögerungsvorrichtung ist, wenn die Bluetooth-Vorrichtung in der Neuverbindungsbeschleunigungsliste gefunden wird.

12. Endgerät nach Anspruch 11, wobei der Prozessor dann, wenn er die computerausführbaren Anweisungen ausführt, ferner die folgenden Schritte implementiert:
Ausführen eines Neuverbindungseigenschaftstests an der Bluetooth-Vorrichtung und Erhalten eines Ergebnisses des Neuverbindungseigenschaftstests, wenn die Bluetooth-Vorrichtung nicht in der Neuverbindungsbeschleunigungsliste gefunden wird; und
Hinzufügen der Bluetooth-Vorrichtung zu der Neuverbindungsbeschleunigungsliste, wenn bestimmt wird, dass die Bluetooth-Vorrichtung gemäß dem Ergebnis des Neuverbindungseigenschaftstests eine Neuverbindungsverzögerungseigenschaft besitzt.

13. Verfahren nach Anspruch 12, wobei der Prozessor die computerlesbaren Anweisungen ausführt, um die Ausführung des Neuverbindungseigenschaftstests an der Bluetooth-Vorrichtung und das Erhalten des Ergebnisses des Neuverbindungseigenschaftstests durch die folgenden Schritte zu implementieren:
Einleiten einer Medienaudioprotokoll-Neuverbindungsanforderung nach dem Standardneuverbindungszeitintervall ab einem Zeitpunkt, zu dem das Neuverbindungsabschlusssignal der Bluetooth-Vorrichtung detektiert wird; und
Detektieren, ob eine Neuverbindung eines Medienaudioprotokolls für die Bluetooth-Vorrichtung erfolgreich ist, und Erhalten des Ergebnisses des Neuverbindungseigenschaftstests nach einer ersten Testzeitperiode ab einem Zeitpunkt, zu dem die Medienaudioprotokoll-Neuverbindungsanforderung nach dem Standardneuverbindungszeitintervall eingeleitet wird.

14. Endgerät nach Anspruch 13, wobei der Prozessor dann, wenn er die computerausführbaren Anweisungen ausführt, ferner die folgenden Schritte implementiert:
Bestimmen, dass die Bluetooth-Vorrichtung gemäß dem Ergebnis des Neuverbindungseigenschaftstests die Neuverbindungsverzögerungseigenschaft besitzt, dann, wenn detektiert wird, dass die Neuverbindung des Medienaudioprotokolls für die Bluetooth-Vorrichtung nach der ersten Testzeitperiode ab einem Zeitpunkt, zu dem die Medienaudioprotokoll-Neuverbindungsanforderung nach dem Standardneuverbindungszeitintervall eingeleitet wird, erfolgreich ist;
Bestimmen, dass die Bluetooth-Vorrichtung gemäß dem Ergebnis des Neuverbindungseigenschaftstests nicht die Neuverbindungsverzögerungseigenschaft besitzt, wenn detektiert wird, dass die Neuverbindung des Medienaudioprotokolls für die Bluetooth-Vorrichtung nach der ersten Testzeitperiode ab dem Zeitpunkt, zu dem die Medienaudioprotokoll-Neuverbindungsanforderung nach dem Standardneuverbindungszeitintervall eingeleitet wird, gescheitert ist.

15. Nicht flüchtiges computerlesbares Speichermedium mit auf ihm gespeicherten computerausführbaren Anweisungen, die dann, wenn sie durch einen Prozessor ausgeführt werden, die Schritte nach einem der Ansprüche 1-7 ausführen.

## Revendications

1. Procédé de reconnexion d'un dispositif Bluetooth, **caractérisé en ce qu'**il comprend :
la détermination (S210) si le dispositif Bluetooth est un dispositif de retard de reconnexion Bluetooth lorsqu'un signal de fin de reconnexion du dispositif Bluetooth est détecté, le dispositif de retard de reconnexion Bluetooth étant un dispositif Bluetooth avec une caractéristique de retard de reconnexion Bluetooth, le dispositif Bluetooth étant déterminé comme ayant la caractéristique de retard de reconnexion en réponse à un résultat de réussite d'une reconnexion de protocole audio multimédia ;
le démarrage (S220) d'un chronométrage à partir d'un moment où le signal de fin de reconnexion est détecté lorsqu'il est déterminé que le dispositif Bluetooth est le dispositif de retard de reconnexion Bluetooth ; et
le lancement (S230) d'une demande de reconnexion de protocole audio multimédia après une période prédéfinie à partir du moment où le signal de fin de reconnexion est détecté, la période prédéfinie étant inférieure à un intervalle de temps de reconnexion standard.

2. Procédé selon la revendication 1, lorsqu'il est détecté que le dispositif Bluetooth termine la reconnexion active d'un protocole audio d'appel, ou lorsqu'il est détecté que le dispositif Bluetooth termine la reconnexion active d'un canal de commande audio multimédia, la détection du signal de fin de reconnexion du dispositif Bluetooth étant déterminée.

3. Procédé selon la revendication 1, la détermination (S210) si le dispositif Bluetooth est le dispositif de retard de reconnexion Bluetooth comprenant : la recherche du dispositif Bluetooth dans une liste d'accélération de reconnexion, la liste d'accélération de reconnexion étant configurée pour stocker des informations de dispositif Bluetooth de dispositifs de retard de reconnexion Bluetooth ; et
la détermination que le dispositif Bluetooth est le dispositif de retard de reconnexion Bluetooth lorsque le dispositif Bluetooth est trouvé dans la liste d'accélération de reconnexion.

4. Procédé selon la revendication 3, comprenant en outre :
la réalisation d'un test de caractéristique de reconnexion sur le dispositif Bluetooth et l'obtention d'un résultat du test de caractéristique de reconnexion lorsque le dispositif Bluetooth n'est pas trouvé dans la liste d'accélération de reconnexion ; et
l'ajout du dispositif Bluetooth à la liste d'accélération de reconnexion lorsqu'il est déterminé que le dispositif Bluetooth présente une caractéristique de retard de reconnexion en fonction du résultat du test de caractéristique de reconnexion.

5. Procédé selon la revendication 4, la réalisation du test de caractéristique de reconnexion sur le dispositif Bluetooth et l'obtention du résultat du test de caractéristique de reconnexion comprenant :
le lancement d'une demande de reconnexion de protocole audio multimédia, après l'intervalle de temps de reconnexion standard à partir du moment où le signal de fin de reconnexion de l'appareil Bluetooth est détecté ; et
la détection si la reconnexion d'un protocole audio multimédia est réussie pour le dispositif Bluetooth et l'obtention du résultat du test de caractéristique de reconnexion, après une première période de test à partir du moment où la demande de reconnexion de protocole audio multimédia est initiée après l'intervalle de temps de reconnexion standard.

6. Procédé selon la revendication 5,
lorsqu'il est détecté que la reconnexion du protocole audio multimédia est réussie pour le dispositif Bluetooth après la première période de test à partir d'un moment où la demande de reconnexion de protocole audio multimédia est initiée après l'intervalle de temps de reconnexion standard, la détermination étant faite que le dispositif Bluetooth a la caractéristique de retard de reconnexion en fonction du résultat du test de caractéristique de reconnexion ;
lorsqu'il est détecté que la reconnexion du protocole audio multimédia a échoué pour le dispositif Bluetooth après la première période de test à partir du moment où la demande de reconnexion de protocole audio multimédia est initiée après l'intervalle de temps de reconnexion standard, la détermination étant faite que le dispositif Bluetooth n'a pas la caractéristique de retard de reconnexion en fonction du résultat du test de caractéristique de reconnexion.

7. Procédé selon l'une quelconque des revendications 3 à 6, comprenant en outre :
la suppression du dispositif Bluetooth de la liste d'accélération de reconnexion lorsqu'il est détecté que la reconnexion du protocole audio multimédia a échoué pour le dispositif Bluetooth après une deuxième période de test à partir du moment où la demande de reconnexion de protocole audio multimédia est initiée après la période de temps prédéfinie.

8. Dispositif de reconnexion d'un dispositif Bluetooth, **caractérisé en ce qu'**il comprend :
un module de détection de signal (710), configuré pour déterminer si le dispositif Bluetooth est un dispositif de retard de reconnexion Bluetooth lorsqu'un signal de fin de reconnexion du dispositif Bluetooth est détecté, le dispositif de retard de reconnexion Bluetooth étant un dispositif Bluetooth avec une caractéristique de retard de reconnexion Bluetooth, le dispositif Bluetooth étant déterminé comme ayant la caractéristique de retard de reconnexion en réponse à un résultat de réussite d'une reconnexion de protocole audio multimédia ;
un module de chronométrage (720), configuré pour commencer le chronométrage à partir du moment où le signal de fin de reconnexion est détecté lorsqu'il est déterminé que le dispositif Bluetooth est le dispositif de retard de reconnexion Bluetooth ; et
un module d'envoi de demande (730), configuré pour lancer une demande de reconnexion de protocole audio multimédia, après une période prédéfinie à partir du moment où le signal de fin de reconnexion est détecté, la période prédéfinie étant inférieure à un intervalle de temps de reconnexion standard.

9. Terminal **caractérisé en ce qu'**il comprend un processeur et une mémoire dans laquelle sont stockées des instructions exécutables par ordinateur qui, lorsqu'elles sont exécutées par le processeur, mettent en œuvre les étapes de :
détermination si un dispositif Bluetooth est un dispositif de retard de reconnexion Bluetooth lorsqu'un signal de fin de reconnexion du dispositif Bluetooth est détecté, le dispositif de retard de reconnexion Bluetooth étant un dispositif Bluetooth doté d'une caractéristique de retard de reconnexion Bluetooth, le dispositif Bluetooth étant déterminé comme ayant la caractéristique de retard de reconnexion en fonction d'un résultat positif d'une reconnexion de protocole audio multimédia ;
démarrage du chronométrage à partir du moment où le signal de fin de reconnexion est détecté lorsqu'il est déterminé que le dispositif Bluetooth est le dispositif de retard de reconnexion Bluetooth ; et
lancement d'une demande de reconnexion de protocole audio multimédia, après une période prédéfinie à partir du moment où le signal de fin de reconnexion est détecté, la période prédéfinie étant inférieure à un intervalle de temps de reconnexion standard.

10. Terminal selon la revendication 9, lors de l'exécution des instructions exécutables par ordinateur, le processeur mettant également en œuvre une étape de :
détermination que le signal de fin de reconnexion du dispositif Bluetooth est détecté, lorsqu'il est détecté que le dispositif Bluetooth achève la reconnexion active d'un protocole audio d'appel, ou lorsqu'il est détecté que le dispositif Bluetooth achève la reconnexion active d'un canal de commande audio multimédia.

11. Terminal selon la revendication 9, le processeur exécutant les instructions exécutables par ordinateur pour mettre en œuvre la détermination que le dispositif Bluetooth est le dispositif de retard de reconnexion Bluetooth par les étapes de :
recherche du dispositif Bluetooth dans une liste d'accélération de reconnexion, la liste d'accélération de reconnexion étant configurée pour stocker des informations de dispositif Bluetooth de dispositifs de retard de reconnexion Bluetooth ; et
détermination que le dispositif Bluetooth est le dispositif de retard de reconnexion Bluetooth lorsque le dispositif Bluetooth est trouvé dans la liste d'accélération de reconnexion.

12. Terminal selon la revendication 11, lors de l'exécution des instructions exécutables par ordinateur, le processeur mettant également en œuvre les étapes de :
réalisation d'un test de caractéristique de reconnexion sur le dispositif Bluetooth et obtention d'un résultat du test de caractéristique de reconnexion lorsque le dispositif Bluetooth n'est pas trouvé dans la liste d'accélération de reconnexion ; et
ajout du dispositif Bluetooth à la liste d'accélération de reconnexion lorsqu'il est déterminé que le dispositif Bluetooth présente une caractéristique de retard de reconnexion en fonction du résultat du test de caractéristique de reconnexion.

13. Procédé selon la revendication 12, le processeur exécutant les instructions lisibles par ordinateur pour mettre en œuvre la réalisation du test de caractéristique de reconnexion sur le dispositif Bluetooth et obtenir le résultat du test de caractéristique de reconnexion par les étapes de :
lancement d'une demande de reconnexion de protocole audio multimédia, après l'intervalle de temps de reconnexion standard à partir du moment où le signal de fin de reconnexion de l'appareil Bluetooth est détecté ; et
détection si la reconnexion d'un protocole audio multimédia est réussie pour le dispositif Bluetooth et obtention du résultat du test de caractéristique de reconnexion, après une première période de test à partir du moment où la demande de reconnexion de protocole audio multimédia est initiée après l'intervalle de temps de reconnexion standard.

14. Terminal selon la revendication 13, lors de l'exécution des instructions exécutables par ordinateur, le processeur mettant également en œuvre les étapes de :
détermination que le dispositif Bluetooth possède la caractéristique de retard de reconnexion en fonction du résultat du test de caractéristique de reconnexion, lorsqu'il est détecté que la reconnexion du protocole audio multimédia est réussie pour le dispositif Bluetooth après la première période de test à partir du moment où la demande de reconnexion de protocole audio multimédia est initiée après l'intervalle de temps de reconnexion standard ; et
détermination que le dispositif Bluetooth n'a pas la caractéristique de retard de reconnexion en fonction du résultat du test de caractéristique de reconnexion, lorsqu'il est détecté que la reconnexion du protocole audio multimédia a échoué pour le dispositif Bluetooth après la première période de test à partir du moment où la demande de reconnexion de protocole audio multimédia est initiée après l'intervalle de temps de reconnexion standard.

15. Support de stockage lisible par ordinateur non volatil sur lequel sont stockées des instructions exécutables par ordinateur qui, lorsqu'elles sont exécutées par un processeur, mettent en œuvre les étapes selon l'une quelconque des revendications 1 à 7.
